# EUROPÄISCHE PATENTANMELDUNG

(11) **EP 2 243 533 A1**
(43) Veröffentlichungstag der Anmeldung: **27.10.2010**
(21) Anmeldenummer: 09005532.8
(22) Anmeldetag: 20.04.2009
(51) Int. Cl.: B01D 45/08

(54) **Tropfenabscheider**

(71) Anmelder: Balcke-Dürr GmbH, 40882 Ratingen (DE)
(72) Erfinder: Bruckmann, Wilhelm, 46049 Oberhausen (DE)
(74) Vertreter: Lang, Friedrich

(57) **Zusammenfassung**

Tropfenabscheider, der dazu vorgesehen ist, in einer Strömungsrichtung durchströmt zu werden, mit einem zumindest abschnittsweise wellenförmigen Profil (1), an dem eine Mehrzahl von Fangtaschen angeordnet ist, und einem stromaufwärts des Profils (1) angeordneten Agglomerator (4,5).

## Beschreibung

Die Erfindung betrifft einen Tropfenabscheider nach Anspruch 1.

Bekannte Tropfenabscheider, beispielsweise solche für Kühltürme, weisen einzelne Profile auf, die über Fangtaschen verfügen. Eine übliche Bauform eines solchen Profils verfügt über acht Fangtaschen ("8-Pocket-Profil"). Diese Bauform hat jedoch den Nachteil, dass sie in Standard-Abscheiderrahmen mit einer Baulänge von 8 Zoll (etwa 20,32 cm) nicht hineinpasst. Weiterhin sind aus dem Stand der Technik Abscheideprofile mit vier Fangtaschen bekannt ("Euroform TS 5/4"), die zwar eine Baulänge aufweisen, welche zumindest geeignet ist, um an Standard-Abscheiderrahmen mit 8 Zoll angepasst zu werden. Allerdings ist der Abscheidegrad mit den vier Fangtaschen für heutige Maßstäbe unbefriedigend.

Aufgabe der Erfindung ist es, die aus dem Stand der Technik bekannten Tropfenabscheider zu verbessern, insbesondere ist es Aufgabe der Erfindung, einen universell einsetzbaren Tropfenabscheider mit einem hohen Wirkungsgrad bereitzustellen.

Diese Aufgabe wird durch einen Tropfenabscheider gemäß Anspruch 1 gelöst. Die Erfindung sieht vor, dass der Tropfenabscheider einen stromaufwärts des Profils zur Tropfenabscheidung angeordneten Agglomerator umfasst, welcher die Anströmung an das Profil verbessert. Die vergleichmäßigte Anströmung führt zu einer besseren Tropfenabscheidung und außerdem zu einer Vergrößerung von kleinen Tropfen. Die Vergrößerung der kleinen Tropfen ist insbesondere deshalb vorteilhaft, da hierdurch ermöglicht wird, auf zumindest eine der bisherigen 8 Fangtaschen zu verzichten. Der erfindungsgemäße Tropfenabscheider weist daher vorzugsweise höchstens sieben Fangtaschen, bevorzugt höchstens sechs Fangtaschen auf. Weiterhin wird bevorzugt, dass der Tropfenabscheider mindestens vier Fangtaschen aufweist, die über die Länge des Profils verteilt sind. Zwar wird durch die verminderte Anzahl von Fangtaschen der Abscheidegrad geringfügig verschlechtert, allerdings wird dies durch das erfindungsgemäße Vorsehen des Agglomerators zumindest im Wesentlichen ausgeglichen.

Vorteilhafte Ausführungsformen der Erfindung weisen einen stromaufwärts des Profils angeordneten Agglomerator auf, der zumindest zwei quer zur Strömungsrichtung angeordnete und in Strömungsrichtung beabstandete Lochbleche umfasst. Lochbleche bieten den Vorteil, dass sie aus widerstandsfähigen und langlebigen Materialien, beispielsweise Edelstahl oder anderen besonderen Metallverbindungen einfach hergestellt werden können, und außerdem preisgünstig sind. Ein weiterer Vorteil von Lochblechen ist, dass sie einfach montiert werden können. So werden die Lochbleche vorzugsweise montiert, indem sie über Bolzen miteinander verbunden werden, sodass eine Sandwich-Konstruktion entsteht, welche den Vorteil einer großen Steifigkeit bietet. Ideale Abstände für den Abstand zwischen den Lochblechen betragen mindestens 10 mm oder maximal 100 mm, bevorzugter mindestens 20 mm oder höchstens 50 mm. Mit diesen bevorzugten Abständen können im Zusammenspiel mit dem Profil auf kleinem Bauraum bereits ausreichende Agglomerationsraten erreicht werden. Andere typische Ausführungsformen der Erfindung weisen zusätzlich oder alternativ zu dem doppelten Lochblech andere Agglomeratoren auf, z.B. ein Wellenprofil, das bevorzugt eine glatte Oberfläche aufweist und bevorzugt lediglich über eine Welle oder sogar nur über eine Halbwelle verfügt. Allgemein hat die Ausführungsform mit dem Sandwich umfassend zwei Lochbleche oder mindestens zwei Lochbleche den Vorteil, dass sie eine einfache, robuste und kostengünstige Lösung mit geringer Bautiefe darstellt. Weiterhin kann bei geeigneter Ausführungsform durch das Sandwich umfassend die mindestens zwei Lochbleche unter Umständen eine Vorabscheidung erreicht werden.

Vorteilhafterweise beträgt der Abstand zwischen dem Profil und dem Agglomerator mindestens 5 mm, bevorzugt mindestens 10 mm und noch bevorzugter mindestens 15 mm. Typische Ausführungsformen der Erfindung weisen idealerweise einen Abstand zwischen dem Agglomerator und dem Profil von mindestens 20 mm auf oder einen Abstand, der im Wesentlichen 20 mm beträgt. Diese Maße bieten den Vorteil einer geringen Bautiefe und einer gleichzeitig idealen Strömungsberuhigung durch den Agglomerator für das Profil.

Bei bevorzugten Ausführungsformen der Erfindung weisen die Lochbleche unterschiedliche Öffnungsflächenanteile auf. Besonders bevorzugt wird, dass das stromaufwärts angeordnete, d.h. bei einem üblichen zu erwartenden Betrieb stromaufwärts gelegene, der Lochbleche einen größeren Öffnungsflächenanteil aufweist als das stromabwärts angeordnete der Lochbleche. Durch die unterschiedlichen freien Querschnitte werden eine ideale Strömungsberuhigung und eine verbesserte Anreicherung von kleinen zu großen Tropfen erreicht. Bevorzugte Verhältnisse der Öffnungsflächen betragen höchstens 1:1,1, bevorzugter höchstens 1:1,5 oder mindestens 1:4, bevorzugter mindestens 1:2,5.

Vorteilhafterweise beträgt die freie Fläche der Lochbleche, die auch mit dem Ausdruck "Öffnungsfläche" bezeichnet werden kann, mindestens 5 % und höchstens 60 %, noch bevorzugter mindestens 15 % und höchstens 40 %. Eine solche Öffnungsfläche bietet den Vorteil einer idealen Strömungsberuhigung. Die Strömungsrichtung bezieht sich auf eine Strömungsrichtung, welche im Normalbetrieb des Tropfenabscheiders vorherrscht.

Vorzugsweise weist das Profil eine Länge von mindestens 15 cm und höchstens 25 cm auf. Besonders bevorzugt wird, falls das Profil eine Länge von mindestens 19 cm und höchstens 21 cm aufweist. Besondere Vorzüge weist eine Ausführungsform mit einer Länge von 8 Zoll oder 20,32 cm auf. Bevorzugt wird ein Profil mit einer Länge, sodass es in eine 8 Zoll (20,32 cm) - Aufnahme einsetzbar ist.

Vorteilhafterweise weist zumindest eine der Fangtaschen eine sich auf einem gekrümmten Abschnitt des Profils im Wesentlichen parallel zu dem wellenförmigen Profil angeordnete Leitfläche auf. Auf diese Weise bildet das Profil zusammen mit der Leitfläche eine Fangtasche. Die so gekrümmt ausgebildete Fangtasche hat sich als besonders wirkungsvoll beim Abscheiden von Tropfen aus dem Strömungsmedium herausgestellt. Vorteilhafterweise umfasst zumindest eine der Fangtaschen eine von einem geraden Teil des Profils in einem spitzen Winkel entgegen der Strömungsrichtung abstehende Störfläche. Besonders bevorzugt wird, falls diese Fangtasche mit der abstehenden Störfläche die in Strömungsrichtung gesehen letzte Fangtasche des Profils ist. Die abstehende Störfläche hat einen großen Einfluss auf die Strömung und ist daher besonders geeignet, noch restliche feine Tropfen, welche noch in dem Strömungsmedium vorhanden sind, abzuscheiden.

Vorteilhafterweise weist das Profil eine Wellenform auf, die im Wesentlichen einer Sinuskurve entspricht. Sinuskurven bieten den Vorteil, dass sie zu einer maximalen Tropfenabscheidung bei minimalen Strömungsbehinderungen führen. Vorteilhafterweise weisen die Fangtaschen einen abnehmenden Querschnitt oder ein abnehmendes Volumen auf. Auf diese Weise werden zum Ende des Profils hin auch noch die kleineren Tropfen gefangen.

Weitere vorteilhafte Ausführungsformen umfassen einen Agglomerator, der ein Paket aus parallel angeordneten Agglomeratorflächen umfasst, die im Querschnitt eine Sägezahnform mit zumindest einem Sägezahn aufweisen. In dem Sägezahnprofil kommt es zu Verwirbelungen und damit zu einer Anreicherung der kleinen Tropfen zu großen Tropfen. Weitere vorteilhafte Ausführungsformen weisen als Agglomerator ein Paket mit Flächen auf, welche im Querschnitt zumindest abschnittweise halbkreisförmig sind. Diese bieten ebenfalls den Vorteil einer Agglomeration von kleinen Tropfen zu großen Tropfen.

Allgemein bietet die Erfindung neben den bereits genannten Vorteilen die folgenden Vorteile. Die Anströmung an das Profil wird durch eine gerichtete Strömung verbessert, wobei eine reduzierte Gesamtbautiefe erreicht wird, die zu besseren Einbaumöglichkeiten in bereits vorhandenen Anlagen führt.

Im Folgenden werden bevorzugte Ausführungsbeispiele anhand einiger Zeichnungen erläutert, wobei die Zeichnungen zeigen:
Fig. 1 zeigt schematisch eine erste bevorzugte Ausführungsform eines Tropfenabscheiders, wobei eine Einzelheit der Fig. 1 innerhalb der Zeichnung vergrößert dargestellt ist,
Fig. 2 zeigt schematisch eine weitere bevorzugte Ausführungsform eines erfindungsgemäßen Tropfenabscheiders und
Fig. 3 zeigt noch eine weitere bevorzugte Ausführungsform eines erfindungsgemäßen Tropfenabscheiders.

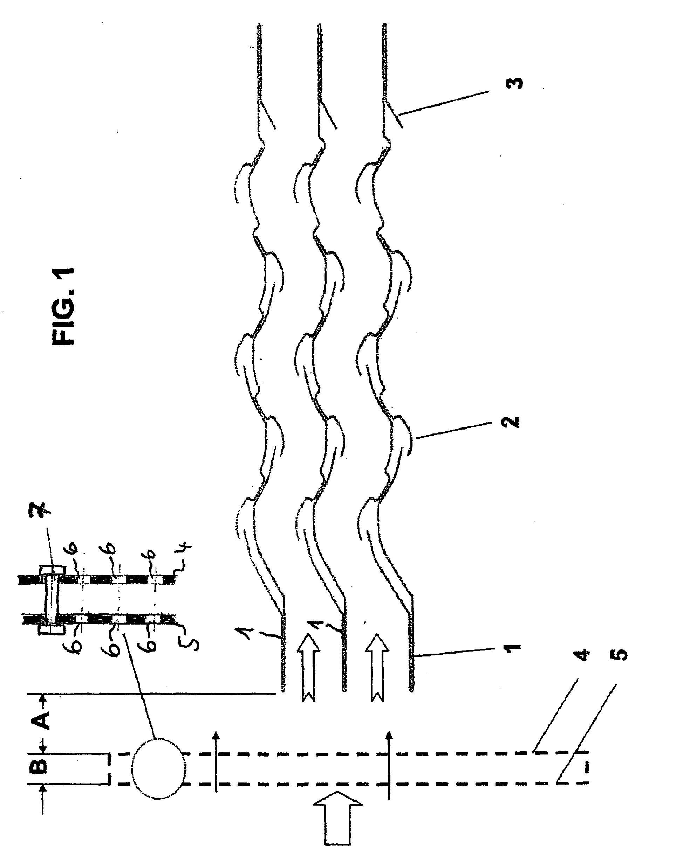

In der Fig. 1 ist eine bevorzugte Ausführungsform eines erfindungsgemäßen Tropfenabscheiders gezeigt. Der Tropfenabscheider verfügt über mehrere parallel angeordnete Profile 1, die über einen Abschnitt hinweg wellenförmig sind. Insgesamt sind in der Fig. 1 drei wellenförmige Profile 1 gezeigt. In den wellenförmigen Abschnitten der Profile 1 sind Fangtaschen angeordnet, die über Leitflächen verfügen, welche parallel zu dem wellenförmigen Profil ausgerichtet sind. Die Fangtaschen mit den parallel zu dem wellenförmigen Profil 1 angeordneten Leitblechen 2 weisen teilweise Hinterschneidungen auf. In Strömungsrichtung weisen die ersten vier Fangtaschen jedes der Profile 1 Hinterschneidungen auf. Dabei nimmt der Querschnitt bzw. das Volumen der Fangtaschen in Strömungsrichtung ab, bis zur letzten wellenförmigen Fangtasche mit einem parallelen, gekrümmten Leitblech 2, die keine Hinterschneidung aufweist. In Strömungsrichtung als letzte Fangtasche angeordnet ist eine Fangtasche, die bereits wieder im geraden Bereich des Profils 1 angeordnet ist und die lediglich über eine in einem spitzen Winkel entgegen der Strömungsrichtung abstehende Störfläche 3 verfügt.

Der Vorteil an dem abnehmenden Volumen bzw. dem abnehmenden Querschnitt und der in Strömungsrichtung als letzte angeordneten Fangtasche mit der abstehenden Störfläche ist, dass die verschiedenen Fangtaschen unterschiedliche Tropfen ideal abscheiden können, sodass über die Strecke des Profils 1 alle oder zumindest nahezu alle zu erwartenden Tröpfchengrößen abgeschieden werden. Zu ergänzen ist, dass die Strömungsrichtung des mit den Tropfen beladenen Strömungsmediums durch Pfeile, sowohl dünne Strichpfeile, als auch Pfeile mit einem hohlen Innenkörper, dargestellt ist. Die Länge der Profile 1 beträgt 8 Zoll oder 20,32 cm. Dies gewährleistet, dass die Profile 1 in bestehende Rahmen eingesetzt werden können.

Weiterhin ist in der Fig. 1 ein in Strömungsrichtung den Profilen 1 vorgeschalteter Agglomerator gezeigt, welcher über zwei quer zur Strömungsrichtung angeordnete und in Strömungsrichtung beabstandete Lochbleche verfügt. Die Lochbleche setzten sich zusammen aus einem stromabwärts in Richtung der Profile 1 angeordneten zweiten Lochblech 4 und einem stromaufwärts angeordneten ersten Lochblech 5. Das zweite Lochblech 4 und das erste Lochblech 5 sind über Bolzen miteinander verbunden und parallel beabstandet zu einem Sandwich zusammengefügt, wobei zwischen den Lochblechen 4 und 5 bei den Bolzen Distanzhülsen angeordnet sind, sodass sich ein stabiler Sandwich-Verbund ergibt.

In einer Vergrößerung sind in der Fig. 1 die Lochbleche 4 und 5 noch einmal genauer dargestellt, wobei in der vergrößerten Ansicht auch Löcher 6 der Lochbleche 4 und 5 gezeigt sind. Die Löcher 6 des stromaufwärts gelegenen ersten Lochblechs 5 weisen einen geringeren Querschnitt auf als die Löcher 6 des ersten Lochblechs 4, das stromabwärts gelegen ist. Die Löcher 6 des zweiten Lochblechs 5 belegen eine Fläche von 35% der Gesamtfläche des zweiten Lochblechs 5. Die Löcher 6 des ersten Lochblechs 4 belegen eine Fläche von 20 % der Gesamtfläche des ersten Lochblechs 4. Die unterschiedlichen Lochflächen bezogen auf die jeweilige Gesamtfläche werden durch unterschiedlich große Löcher 6 in den Lochblechen 4 und 5 realisiert. Diese Anordnung der zwei Lochbleche 4 und 5 mit den unterschiedlichen Lochgrößen der Löcher 6 führt in Kombination mit der parallelen Anordnung der Lochbleche 4 und 5 quer zur Strömung dazu, dass die Strömung gleichgerichtet wird und es außerdem zu einer Agglomeration von kleinen Tropfen zu größeren Tropfen kommt. Ebenfalls in der vergrößerten Ansicht der Fig. 1 dargestellt ist ein Bolzen 7, welcher die beiden Lochbleche 4 und 5 verbindet.

Die Lochbleche 4 und 5 sind parallel beabstandet um einen Abstand B, der 30 mm beträgt. Anzumerken ist, dass der Abstand A zwischen den Profilen 1 und den Lochblechen 4 und 5 50 mm beträgt. Die Fig. 1 ist bezüglich der Querschnitte der Profile 1 maßstabsgetreu ist, allerdings nicht bezüglich der Abstände A und B. Daher sind die mit den Profilen 1 maßstabsgetreu offenbarten Einzelheiten der Profile 1, insbesondere die Anordnung oder die Form der Fangtaschen, ausdrücklich Bestandteil der Offenbarung dieser Anmeldung, wobei die Querschnittsform der Profile 1 in der Fig. 1 eine besonders günstige Tropfenabscheidung bewirkt.

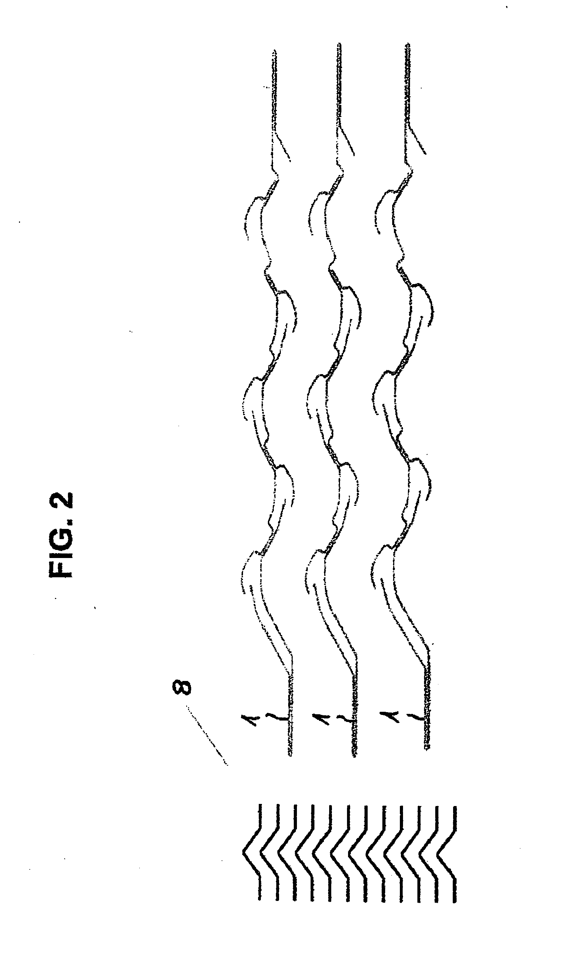

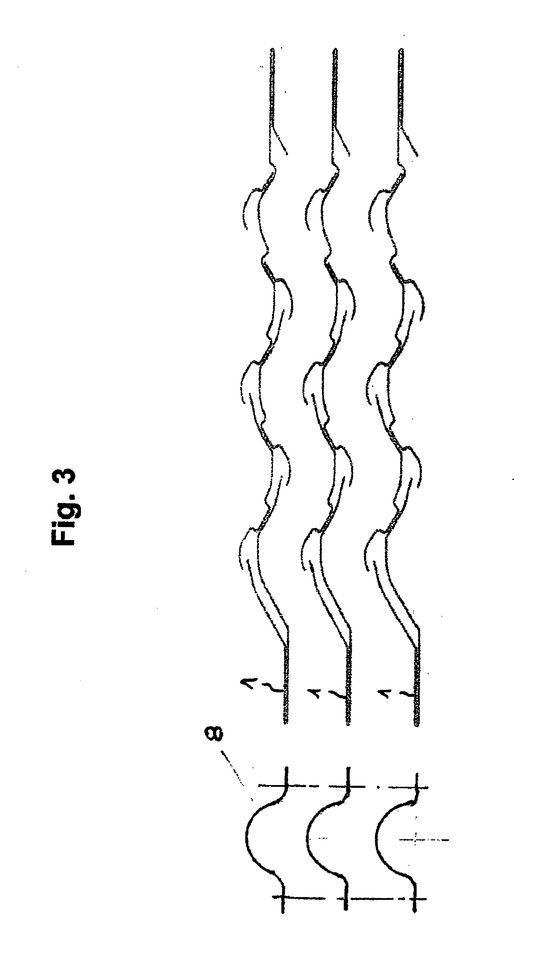

In den Fig. 2 und 3 sind weitere bevorzugte Ausführungsformen der Erfindung dargestellt, wobei für gleiche Teile gleiche Bezugszeichen verwendet werden. Einige Bezugszeichen wurden der Übersichtlichkeit halber auch weggelassen. In der Fig. 2 ist eine alternative Bauform eines Agglomerators dargestellt. Der Agglomerator in der Fig. 2 verfügt über Profilbleche 8, welche in Strömungsrichtung sägezahnförmig ausgebildet sind, sodass in Strömungsrichtung zunächst eine gerade Ablenkung in eine Richtung und darauf folgend eine gerade Ablenkung in die entgegengesetzte Richtung erfolgt. Ein Paket dieser Profilbleche 8 ist den Profilen 1 vorgeschaltet, um eine Agglomeration von kleinen Tropfen und eine Vergleichmäßigung der Strömung zu erreichen.

In der Fig. 3 ist eine weitere Ausführungsform des Agglomerators mit weiteren Profilblechen 8 gezeigt. Die Profilbleche 8 der Ausführungsform der Fig. 3 weisen halbkreisförmige Ausbuchtungen auf, welche über abgerundete Ecken in die Profilbleche 8 eingefügt sind.

Die Erfindung ist nicht auf die vorstehend beschriebenen bevorzugten Ausführungsbeispiele beschränkt, vielmehr wird der Umfang der Erfindung durch die Ansprüche bestimmt.

## Patentansprüche

1. Tropfenabscheider, der dazu vorgesehen ist, in einer Strömungsrichtung durchströmt zu werden, mit einem zumindest abschnittsweise wellenförmigen Profil (1), an dem eine Mehrzahl von Fangtaschen angeordnet ist, und einem stromaufwärts des Profils (1) angeordneten Agglomerator.

2. Tropfenabscheider nach Anspruch 1, **dadurch gekennzeichnet, dass** der Agglomerator zwei quer zur Strömungsrichtung angeordnete und in Strömungsrichtung beabstandete Lochbleche (4, 5) aufweist.

3. Tropfenabscheider nach Anspruch 2, **dadurch gekennzeichnet, dass** der Abstand zwischen den Lochblechen (4, 5) mindestens 10 mm und maximal 100 mm beträgt.

4. Tropfenabscheider nach Anspruch 3, **dadurch gekennzeichnet, dass** die Lochbleche (4, 5) unterschiedliche Öffnungsflächenanteile aufweisen.

5. Tropfenabscheider nach Anspruch 3 oder 4, **dadurch gekennzeichnet, dass** die das stromaufwärts angeordnete der Lochbleche (5) einen größeren Öffnungsflächenanteil aufweist als das stromabwärts angeordnete der Lochbleche (4).

6. Tropfenabscheider nach einem der vorhergehenden Ansprüche, **dadurch gekennzeichnet, dass** zumindest eine der Fangtaschen eine sich auf einem gekrümmten Abschnitt des Profils (1) im wesentlichen parallel zu dem wellenförmigen Profil angeordnete Leitfläche (2) aufweist.

7. Tropfenabscheider nach einem der vorhergehenden Ansprüche, **dadurch gekennzeichnet, dass** zumindest eine der Fangtaschen eine von einem geraden Teil des Profils (1) in einem spitzen Winkel entgegen der Strömungsrichtung abstehende Störfläche (3) aufweist.

8. Tropfenabscheider nach einem der vorhergehenden Ansprüche, **dadurch gekennzeichnet, dass** das Profil (1) eine Länge von mindestens 15 cm und höchstens 25 cm aufweist.

9. Tropfenabscheider nach einem der vorhergehenden Ansprüche, **dadurch gekennzeichnet, dass** das Profil (1) höchstens sieben über die Länge des Profils verteilte Fangtaschen aufweist.

10. Tropfenabscheider nach einem der vorhergehenden Ansprüche, **dadurch gekennzeichnet, dass** das Profil (1) mindestens vier oder höchstens sechs über die Länge des Profils (1) verteilte Fangtaschen aufweist.
